Europäisches Patentamt

European Patent Office

Office européen des brevets

(11) Publication number: **0 365 968**
**A1**

## EUROPEAN PATENT APPLICATION

(21) Application number: 89119180.1

(22) Date of filing: 16.10.89

(51) Int. Cl.5: **C08K 3/34 , C08L 75/02 , C08L 75/04**

(30) Priority: 17.10.88 US 259214

(43) Date of publication of application:
**02.05.90 Bulletin 90/18**

(84) Designated Contracting States:
**AT BE CH DE ES FR GB GR IT LI LU NL SE**

(71) Applicant: **THE DOW CHEMICAL COMPANY**
**2030 Dow Center Abbott Road**
**Midland, MI 48640(US)**

(72) Inventor: **Martinez, Eloy C.**
**606 Dogwood**
**Lake Jackson Texas 77566(US)**

(74) Representative: **Huber, Bernhard, Dipl.-Chem.**
**et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**D-8000 München 86(DE)**

(54) Reinforced polymer compositions having excellent distinctness of image.

(57) Molded polyurethanes are filled with a mica filler being delaminated such that the filled polymer composition retains a notched Izod impact strength of at least about 2.5 ft-lb./in notch (135 J/m notch) and a distinctness of image on a painted surface and at least about 85. The mica filler preferably has a thickness of less than about 1.5 $\mu$m. Use of such a mica filler provides a polymer composition having surprising good physical properties and excellent surface quality.

EP 0 365 968 A1

## REINFORCED POLYMER COMPOSITIONS HAVING EXCELLENT DISTINCTNESS OF IMAGE

This invention relates to reinforced polymers, more particularly to molded polyurethane and/or polyurea polymers which contain a platelet filler material, have excellent impact strength and demonstrate excellent distinctness of image (DOI) on a painted surface.

It is well-known to employ various filler materials to modify the physical properties of polymeric materials. The use of such fillers is thoroughly described, for example, in Handbook of Fillers and Reinforcements for Plastics, Katz et al., eds., Van Nostrand Reinhold Company, New York (1978). Polyurethane and/or polyurea polymers having their physical properties modified by fillers are increasingly being used to replace metals. Of particular interest are certain automotive applications, especially automotive exterior body parts. Filled polymers offer several advantages in these applications, particularly their ability to withstand minor impacts, such as encountered in low speed collisions, without damage and the fact that they do not rust. The filled polymers used in making these body parts must exhibit a demanding combination of physical properties. They must have good thermal properties over a wide temperature range, have good dimensional stability, be rigid enough to bear their own weight, yet be flexible enough to withstand minor impact without damage, and be relatively unaffected by extremes in weather conditions.

Success in meeting most of the foregoing criteria has been achieved by using certain reinforced polymers. Frequently, when a filler is added to improve one or more physical properties, it also undesirably affects other physical properties. For instance, some fillers added as reinforcing fillers to polyurethanes reduce the impact strength and/or surface properties. Such effects are discussed, for instance, by Maik and Fisa in "Mica as a Reinforcement for Polyurethanes RIM," in Plastics Compounding, vol.9, no. 3, May/June 1986 pp. 16-21. In that discussion, it is noted that addition of certain glass flakes and mica fillers reduces the notched Izod Impact Strength of a polyurethane from 3.45 to 3.89 ft-lb/in notch (185 to 208 J/m notch) for unfilled material to 1.76 to 1.96 ft-lb/in notch (94 to 105 J/m notch) for the same material containing about 20 percent by weight glass flake or certain phlogopite mica.

In spite of the lowering of impact strength observed when various mica fillers are used, certain micas have been suggested for use in polyurethanes. For instance in Japanese 62-54755, from 5 to 25 percent by weight of mica having an average diameter of less than about 50 micrometers has been suggested for use in a polyurethane. Additionally, flake fillers, including certain micas having a thickness of 3 to 15 micrometers and aspect ratios of 20 to 200 (diameter to thickness), have been used in certain polyurethanes according to Japanese 58/2011829. Similarly, certain mica flakes having a weight average flake diameter of less than about 50 $\mu$m may be used in certain polyurethanes as described in Japanese 85/195600. In general, when mica is used in polyurethanes and/or polyureas, particularly reaction injection molded polyurethanes and/or polyureas, however, it significantly reduces the impact strength thereof.

Filled polymers also often have relatively poorer surface qualities than metals. Metals provide a characteristically mirror-like surface after painting. Unfilled polymers often approach or equal the surface qualities of metals, but reinforced or extended polymers usually are significantly inferior in this respect. Because surface appearance, particularly the surface appearance of a painted surface, is of major importance to the consumer, it is highly desirable to provide a polymeric material having improved surface qualities, and other desirable physical properties. Flaked glass is an example of a reinforcing filler which can give impact strengths satisfactory for some applications, but which frequently gives poor surface properties.

Similarly, there are other applications wherein both impact strength and excellent surface appearance in a filled polymer is desired. Accordingly, it would be desirable to provide a filled polyurethane and/or polyurea polymer having excellent surface qualities as well as high impact strength.

In one aspect, the invention is a filled polymer composition comprising a polyurethane and/or polyurea matrix having dispersed therein a mica filler having a number average thickness of less than about 1.5 micrometers.

In yet another aspect, the invention is a filled polymer composition comprising a polyurethane and/or polyurea matrix having dispersed therein a muscovite mica filler.

In yet another aspect, this invention is a filled polymer composition comprising a polyurethane and/or polyurea matrix having dispersed therein a mica filler which is delaminated such that the filled polymer composition retains a notched Izod impact strength of at least about 2.5 ft-lb/in notch (135 J/m notch) and a distinctness of image on a painted surface of at least about 85.

In yet another aspect, this invention is a filled polymer composition comprising a polyurethane and/or polyurea which is a reaction product of precursor materials comprising an aromatic polyisocyanate, an aromatic diamine or alkylene glycol chain extender, and a relatively high equivalent weight isocyanate-reactive material which is a primary hydroxyl-, primary amine- or secondary amine-terminated polyether having an average functionality of 1.8 to 4 and an equivalent weight of from 1000 to 2500.

In this invention, a molded polymeric material having good physical properties and surface qualities is obtained with the use of a specified mica filler. The mica filler is advantageously highly delaminated. By delaminated, it is meant that the layers of a mica are separated one from another. The mica is advantageously delaminated such that when used in a polyurethane and/or polyurea composition, the composition retains both impact strength and excellent surface qualities, especially of a painted surface. Delamination advantageously produces relatively thin particles, preferably particles having a number average thickness of less than about 1.5, more preferably less than about 1, most preferably less than about 0.8 micrometers ($\mu$m), as determined by measurement of particle images produced by scanning electron micrography (SEM). Delamination also preferably produces particles having a generally smooth and rounded, rather than jagged, perimeter contours of their larger surfaces (faces). Such contours are visually observable by SEM.

Impact strengths discussed herein are advantageously determined according to the Gardner Impact test ASTM D-3029-84. Alternatively the procedure of ASTM D-256-81 using notched samples as described therein is suitable for determining impact strength. Such impact strengths are referred to as notched Izod impact strengths. Other methods within the skill in the art for determining impact strength are also suitably used. When mica is used as a filler according to the practice of the invention, particularly in a molded polyurethane or polyurea composition, the notched Izod impact strength is advantageously at least about 2.5 ft-lb./in notch (135 J/m notch), preferably at least about 3 (160), more preferably at least about 3.5 ft-lb./in notch (185 J/m notch). Advantages of the invention are frequently even more evident where the impact strength is measured by the Gardner method wherein a sample is not notched. The Gardner impact strength of a composition of the invention is preferably at least about 2.5 (2.4 x $10^{-2}$), more preferably 3.5 (3.3 x $10^{-2}$), and most preferably at least about 4 foot-pounds (3.8 x $10^{-3}$ m-kg) at 73° F (23° C).

Surface quality, especially of a painted surface, as well as impact strength is maintained in the practice of the invention. A molded article made according to this invention exhibits surprisingly good surface characteristics, compared to a similar article made using flaked glass fillers, milled glass fillers, Wollastonite, mica particles having characteristics different from the mica particles used in the practice of the invention, and other alternative fillers. Using the distinctness of image (DOI) test on painted samples using a Dorigon DOI meter model D47-6 as set out hereinafter, an improvement of at least 2, preferably at least about 5, more preferably at least about 10 units on the DOI scale is generally obtained with this invention, relative to that of a similar composition containing alternative fillers such as those listed. Accordingly, DOI measurements of greater than 80, preferably at least about 85 or more, more preferably at least 90 or more, and most preferably at least about 94 or even higher are obtained with this invention. Because of these excellent surface properties, the molded compositions of this invention are useful in applications which require cosmetically appealing finishes, such as exterior automobile body parts, particularly automobile body panels. Distinctness of image as used herein refers to distinctness of image on a painted surface as measured by the test described above.

Mica fillers used in the practice of the invention preferably have aspect ratios of greater than 40, more preferably from 50 to 250 and most preferably from 50 to 100. The aspect ratio is the ratio of the largest dimension of a mica platelet to its smallest dimension, which dimension is, in the practice of this invention, its thickness.

Any particle size of mica which produces a polyurethane and/or polyurea having the desired physical properties is suitable for use in the practice of the invention. Preferably, however, the weight average particle size as determined by the procedure of ASTM D 185-78 (as applied to muscovite mica as described by ASTM D 607-82) is from 10 to 200, more preferably from 20 to 70, most preferably from about 35 to about 45 micrometers. The weight average particle size is alternatively determined by measuring laser light diffraction of samples dispersed in water according to operating instructions provided by manufacturers of instruments for making such measurements. Particle size is preferably calculated from such measurements using the Fraunhofer diffraction theory. Such a procedure is under consideration by ASTM Committee E-29 on Particle Size Analysis.

Many types of mica are available and any meeting the preceding description are suitably used in the practice of the invention. Muscovite mica is, however, preferred. Muscovite mica is a potassium aluminum aluminosilicate, predominately $K_2Al_4(Al_2Si_6O_{20})OH)_4$. Such a mica is commercially available from several suppliers and is exemplified by Alsibronz Wet Ground Mica from Franklin Minera Products; and Muscovite MICA C-1000 from KMG Minerals; Aspraloc 100 mica, commercially available from J. M. Huber Corporation, the latter being more preferred in the practice of the invention.

The mica is also advantageously relatively pure. Preferably, there are less than 5 weight percent sand, silica and/or other abrasive materials, more preferably there is less than 1, most preferably less than 0.5 weight percent of such materials.

The mica filler is present in an amount sufficient to provide enhanced physical properties to the polymer composition. In general, desirable physical properties are obtained when the mica filler constitutes at least about 5 weight percent, preferably at least about 15 weight percent, more preferably at least about 20 weight percent, most preferably at least about 25 weight percent of the polymer, up to about 70 weight percent, preferably up to about 50 weight percent, more preferably up to about 30 weight percent of the filled polymer composition. At least about 20 percent, preferably at least about 25 percent by weight of the mica filler is generally preferred to achieve a balance of physical properties and surface properties for replacement of steel such as in automobile body panels.

It is often advantageous, although not essential, to employ fillers which are "surface treated", i.e., rendered more compatible with the polymer matrix either through chemical modification of the filler itself or by coating the surface of the filler with a material which promotes adhesion to the polymer matrix. Various types of surface treating materials are known, and their use herein will be apparent to those skilled in the relevant art. Suitable surface treating materials include fatty acid salts such as calcium stearate, organic esters of fatty esters, including esters of a fatty acid and a polyhydric alcohol as described in U.S. Patent 4,126,593; silane coupling agents, such as, for example, an organo silicon compound including amino-, chloro-, isocyanato- and epoxy-silane coupling agents as described, for example, in U.S. Patents 4,474,900; 4,582,887; 4,585,850 and 4,607,090, and James R. Steinmetz, "Silanes", Modern Plastics Encyclopedia '88, McGraw-Hill, New York (1987). Titanate coupling agents, including, for example, those of the type described in Salvatore J. Monte, "Titanates", Modern Plastics Encyclopedia '88, McGraw-Hill, New York (1987), are also useful herein. Of these surface treating agents, the silanes, particularly the amino-silanes, are preferred on the basis of best performance, availability and economy. Such surface treating agents are advantageously used in a minor amount based on the weight of the filler material, such as from 0.1 to 10, preferably 1 to 2, weight percent, based on the weight of the filler. The use of surface treatments has been found to somewhat reduce the impact strength of the filler polymer, so it is normally desirable to use the smallest quantity thereof which provides improved bonding of the polymer to the filler.

The polyurethane and/or polyurea polymer used herein advantageously is elastomeric, and is characterized in having a plurality of urethane or urea linkages, or mixtures of urethane and urea linkages. This polymer is also advantageously a thermosetting polymer, although thermoplastic polyurethanes are also useful in some applications where thermoplasticity is desired. The polymer is advantageously characterized in having a flexural modulus (filled) of at least 25,000 psi (170 MPa), preferably at least 35,000 (240 MPa), more preferably from 50,000 (345 MPa) psi to 300,000 (2100 MPa), and most preferably from 50,000 (345 MPa) to 100,000 psi (700 MPa). For use in automobile body panels, the flexural modulus (of a filled composition) is preferably at least 150,000, (1000 MPa) more preferably from 200,000 (1400 MPa) to 400,000 psi (2800 MPa). The resulting polymer is also preferably noncellular or microcellular, more preferably having a bulk density (filled) of 0.8 to 1.6 g/cc (800 to 1600 kg/m$^3$), most preferably 1 to 1.35 g/cc (1000 to 1350 kg/m$^3$).

These polyurethanes are advantageously prepared by reacting a relatively high equivalent weight active hydrogen-containing material with a polyisocyanate, usually in the presence of a chain extender. The relatively high equivalent weight active hydrogen-containing material is advantageously one as described, for example, in U.S. Patent 4,390,645. Preferably, it has an equivalent weight of from 700 to 3000, more preferably from 1000 to 2500, most preferably from 1000 to 2200, based on the number of isocyanate-reactive groups, and is a polyether or polyester nominally containing from 1.7 to 4, preferably from 1.8 to 3, most preferably from 1.8 to 2.8 hydroxyl or primary or secondary amine group/molecule, or mixture of such groups. Preferably, the isocyanate reactive groups are primary hydroxyl or primary or secondary aliphatic amine or primary or secondary aromatic amine, as these are highly reactive as desired for the preferred RIM (reaction injection molding) process. It is also preferred that the relatively high equivalent weight active hydrogen-containing material be a polyether, most preferably a polymer of propylene oxide or mixture thereof with a minor amount of ethylene oxide. Such amine-terminated polyethers and their use in making polyurethanes are described, for example, in U.S. Patents 4,444,910 and 4,565,645, and European Patent Publication 81,701. Mixtures of primary hydroxyl-terminated polyether polyols and aminated polyethers are of special interest herein, due to their favorable properties and processing characteristics which make them especially suitable for making molded polyurethane in a RIM process.

Either aliphatic or aromatic polyisocyanates can be used in this invention. Suitable aliphatic polyisocyanates include ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3- and 1,4-diisocyanate, 1,5-diisocyanato-3,3,5-trimethylcyclohexane, 2,4- and/or 2,6-hexahydrotoluene diisocyanate, perhydro-2,4'- and/or -4,4'-diphenylmethane diisocyanate ($H_{12}$MDI), isophorone diisocyanate and mixtures thereof.

Suitable aromatic polyisocyanates include, for example, 2,4- and/or 2,6-toluene diisocyanate (TDI), 2,4'- and/or 2,6'-diphenylmethane diisocyanate (MDI), 1,3- and 1,4-phenylene diisocyanate, 1,5-naphthylene diisocyanate, triphenylmethane-4,4',4''-triisocyanate and polyphenylpolymethylene polyisocyanates.

In addition, derivatives and prepolymers of the foregoing polyisocyanates such as those containing urethane, carbodiimide, allophanate, isocyanurate, acylated urea, biuret, ester and similar groups are useful herein. Of these, prepolymers of TDI and MDI, and the so-called "liquid MDI" products which contain carbodiimide groups and have an equivalent weight of about 130 to 150 are of particular significance.

Of the foregoing polyisocyanates, TDI, MDI, isophorone diisocyanate, $H_{12}$MDI, hexamethylene diisocyanate, cyclohexane diisocyanate and derivatives thereof are preferred due to their cost, commercial availability and performance. TDI, MDI and derivatives of MDI are most preferred. MDI and its derivatives are especially preferred.

The polyisocyanate is used in an amount sufficient to provide an isocyanate index of from 0.6 to 2, preferably from 0.9 to 1.25, more preferably from 0.95 to 1.1. At lower indices, insufficient curing occurs, causing the polymer to have poor properties. The "isocyanate index" is the ratio of isocyanate groups to active hydrogen-containing groups contained in the mixture which reacts to form the polymer.

Chain extenders are advantageously used to improve the flexural modulus and high temperature properties of the polymer. "Chain extenders," for the purposes of this invention, include compounds having two active hydrogen-containing groups per molecule and an equivalent weight of from 31 to 300, preferably from 31 to 150. Hydroxyl-containing chain extenders include the alkylene glycols and glycol ethers such as, for example, ethylene glycol, 1,3-propylene glycol, 1,4-butylene glycol, 1,6-hexamethylene glycol, diethylene glycol, triethylene glycol, dipropylene glycol, tripropylene glycol and 1,4-cyclohexanedimethanol. Amine chain extenders include diethyltoluene diamine and other sterically hindered aromatic diamines as described in U.S. Patent 4,218,510, phenylene diamine, methylene bis(o-chloroaniline), methylene bis-(aniline), including NaCl blocked methylene bis(aniline), toluene diamine and aromatic diamines which are substituted at one or more of the carbon atoms adjacent to the amine groups with a lower alkyl group. Diethyltoluene diamine and other stearically hindered aromatic diamines are most preferred due to their reactivity and properties obtained with their use. When chain extenders are used, they preferably comprise from 5 to 80, preferably from 25 to 40, weight percent of the active hydrogen containing compounds.

Crosslinking agents are also advantageously used in polyurethane polymer compositions filled according to the practice of the invention. "Cross-linking agents," for the purpose of this invention, include compounds having more than two, preferably from 3 to 8, more preferably from 3 to 4 active hydrogen-containing groups per molecule and an equivalent weight of from 47 to 300, preferably from 47 to 150. Hydroxy-containing crosslinking agents include alkylene triols such as trimethyolpropane, and glycerine; alkanolamines such as diethanolamine, triisopropanolamine, triethanolamine, diisopropanolamine, adducts of from 4 to 8 moles of an alkylene oxide such as ethylene oxide or propylene oxide with ethylene diamine; and polyamines such as, for example, methylene bis (o-chloroaniline), diethyl toluene diamine, ethylene diamine and ammonia. Diethyl toluene diamine and the adducts of alkylene oxides with ethylene diamine and similar amines are preferred crosslinkers in the practice of the invention.

Preferred such polymers made using the foregoing isocyanates, high equivalent weight isocyanate-reactive materials, crosslinking agents and chain extenders are described, for example, in U.S. Patents 4,374,210; 4,444,910; 4,218,510; 4,296,945; 4,689,356; 4,585.803 and European Patent Publication 81,701. In a most preferred embodiment, such polyurethane and/or polyurea polymer is processed in a reaction injection molding (RIM) process. Polyurea polymers as described in U.S. Patent 4,444,910 and polyurethane-polyurea polymers as described in U.S. Patent 4,269,945 are most preferred. In such polyurethane-polyurea polymers, it is generally preferred that both a chain extender and a crosslinking agent be used, preferably as from 5 to 70, more preferably from 15 to 35 weight percent of the active hydrogen containing compounds. The ratio of chain extender to crosslinker is preferably from 15:1 to 1:1, more preferably from 8:1 to 1.5:1 to achieve desirable flexural moduli and/or improved processing characteristics such as ease of handling freshly molded parts.

In addition to the components described before, other materials may be used in the preparation of the polyurethane. A catalyst for the reaction of the precursor materials is preferably used in making the polyurethane. Although a wide variety of materials are known to be useful for this purpose, the most widely used and preferred catalysts are the tertiary amine catalysts and the organometallic catalysts. Often the catalyst can be omitted, particularly when polyurea polymers are prepared, as taught in U.S. Patent 4,433,067.

Exemplary tertiary amine catalysts, include, for example, triethylenediamine, N-methyl morpholine, N-ethyl morpholine, diethyl ethanolamine, N-coco morpholine, 1-methyl-4-dimethylaminoethyl piperazine, 3-methoxy-N-dimethylpropylamine, N,N-diethyl-3-diethylaminopropylamine, dimethylbenzyl amine and bis(2-dimethylaminoethyl)ether. Tertiary amine catalysts are advantageously employed in an amount of from 0.01 to 5, preferably from 0.05 to 2 parts per 100 parts by weight of the amine-terminated compound.

Exemplary organometallic catalysts include organic salts of metals such as tin, bismuth, iron, mercury, zinc and lead, with the organotin compounds being preferred. Suitable organotin catalysts include dimethyltindilaurate, dibutyltindilaurate and stannous octoate. Other suitable catalysts are taught, for example, in U.S. Patent 2,846,408. Advantageously, from 0.001 to 0.5 part by weight of an organometallic catalyst is used per 100 parts of amine-terminated compound.

A blowing agent is optionally employed in this invention, but as stated before, it is preferred that the polymer has a density of at least 0.8 g/cc (800 kg/m³), so the use thereof herein is preferably limited for this reason. The blowing agent is any material which is capable of generating a gas under the conditions of the reaction of a polyisocyanate and a polyol. Such materials include, for example, air, carbon dioxide, nitrogen, water, formic acid, low-boiling halogenated alkanes, finely divided solids and the so-called "azo" blowing agents such as azobis(formamide). Preferred are water, the low-boiling halogenated alkanes, or mixtures thereof. When density reduction is desired, a preferred method is to incorporate a gas such as air or nitrogen into the isocyanate-reactive components and/or the polyisocyanate component, in a process commonly known as "nucleation".

In addition to the foregoing, other optional additives which are useful herein include, for example, surfactants, mold release additives, plasticizers, catalysts, reaction modifiers, pigments, colorants and additional fillers.

While any additional filler is suitably used in conjunction with the mica filler, preferably the filler is one which does not result in lowering of impact strength more than about 50 percent beyond the lowering exhibited using the mica fillers alone. More preferably the additional lowering is less than 25 percent, most preferably, less than 10 percent. Suitable additional fillers include any fillers within the skill in the art, including, for example, clays, inorganic carbonates, ground rock, glass and fiberous materials. The additional filler is of any shape and size suitable to produce a polyurethane or polyurea having desirable properties.

Particularly suitable additional fillers are inorganic fillers having an aspect ratio of less than about 4 and an average particle size of about 10 μm or less, preferably about 5 μm or less, more preferably about 2 μm or less, most preferably from 0.5 to 2 μm. Such fillers may or may not be surface treated as described more fully herein. Among the inorganic fillers useful as the supplementary filler are talc, calcium carbonate, feldspar, wollastonite and nepheline syenite, with talc and wollastonite being highly preferred on the basis of performance. Any of the commonly available talc products are useful herein, such as Montana talc, California talc, Vermont talc, New York talc and the like, but those such as Montana talc which contain relatively low levels of impurities are preferred, as indicated by a LOI (loss on ignition) value of 10 or less, more preferably about 5 or less are preferred. Also highly preferred are talc products which have a top particle size of about 20 μm or less, more preferably about 10 μm or less. Exemplary such talc products include Microtalc MP 12-50, Microtalc MP 15-38, Microtalc CP 10-40, Microtalc CP 14-35, Microtalc CP 20-30, all available from Pfizer Inc., MPM Division, Desertalc 57, Mikro 507, Mikro 707, all available from Johns-Manville Corp., Emtal 4190 and Emtal 15, both available from Engelhard Minerals & Chemicals Corp., Mistron Frost, Mistron Cyprubond and Mistron Vapor, available from Cyprus Industrial Minerals Co., and NYTAL 400, available from R. T. Vanderbilt Company.

In such combinations the combination of fillers preferably comprises less than about 70 percent by weight, more preferably less than about 50 percent by weight, most preferably less than about 40 percent by weight of the polymer composition containing the fillers. While the mica filler is suitably any portion of the filler combination, the mica filler preferably comprises less than about 95 percent, more preferably from about 60 to about 95 percent, most preferably from about 65 to about 75 percent of the filler combination. Preferably, there is less additional filler than mica. The additional filler, thus, preferably comprises less than 50 percent, more preferably from 50 to 40 percent, most preferably from 25 to 35 percent of the filler combination. Combinations of the mica and such an additional inorganic filler produce polyurethanes having particularly good DOI.

In making the filled polymer composition, the filler is intermixed with the polyurethane and/or polyurea polymer in any convenient manner which provides for a substantially homogeneous dispersion of the filler. In making thermosetting polyurethane and/or polyurea polymers from liquid precursor materials, it is generally convenient to incorporate the filler into one or more of the precursor materials. The precursor is then reacted with the remaining precursor materials to form the filled product. For example, the filler may be incorporated into the polyisocyanate components or preferably, into one or more of the isocyanate-reactive components.

Although the particular molding process is not considered critical to this invention, and conventional casting techniques can be used, it is preferred to prepare molded articles according to this invention according to the so-called reaction injection molding technique, in which the isocyanate-reactive materials are mixed under high pressure with the polyisocyanate composition and rapidly injected into the closed mold. This process is suitable for rapidly producing molded parts, and more importantly, permits the handling of the more reactive precursor materials which are preferred in this invention.

Molded automobile body parts according to this invention are particularly useful in preparing outer skins for a door shell useful in conjunction with a cartridge assembly, as described, for example, in the copending applications of McLaren et al, serial numbers 909,820 and 098,593, filed September 19, 1986 and September 17, 1987, respectively.

The following examples are given to illustrate the invention but are not intended to limit the scope thereof. All parts and percentages are by weight unless otherwise indicated.

Examples 1 and 2 and Comparative Samples A-D

A "B-side" formulation for a polyurethane-urea elastomer having a flexural modulus (unfilled) of about 85,000 was prepared by blending a mixture of about 100 parts relatively high equivalent weight primary amine-terminated polyether and a relatively high equivalent weight primary hydroxyl-terminated polyether, an isomeric mixture of diethyltoluene diamine, an internal mold release agent, and a mixture of amine and organotin catalysts. This formulation was reacted with a soft segment MDI prepolymer of the type described in U.S. Patent 4,374,210, having an equivalent weight of 215, at a 1.05 index. In the Examples and Comparative Samples, one or more fillers were incorporated into the B-side formulation before the reaction with the prepolymer, as indicated in Table I.

The reaction was conducted in a RIM process on a standard RIM machine, wherein the A-side and B-side were injected into the mold at a temperature of 140°F (60°C), the mixing pressure was 2000 psi (14000 MPa), the mold temperature was 175°F (80°C) and the demold time was 30 seconds. The mold was a flat plaque having a thickness of 0.125" (3.2 mm). The part was then postcured at 325°F (160°C) for one hour. The plaques were cut into 4 X 12" (102 x 305 mm) panels and were washed thoroughly to remove surface impurities and residual mold release agents remaining on the surface. Physical properties of certain of the samples were measured and were reported in Table I following. Each of Samples and Comparative Samples were tested for surface quality by a DOI test.

The DOI of the parts was determined by applying a conductive black primer, commercially available as HAP-1724G from PPG Industries, in two passes, each pass followed by flashing off the solvent, so that a total film build of from 0.8 to 1.1 mils (0.02 to 0.03 mm) was applied. The primer was cured for 30 minutes at 250°F (120°C). A black topcoat, commercially available as Inmont ESB 33J100, was then applied in three passes, each pass followed by flashing off the solvent, so a total film build of 1.5 to 2.0 mils (0.05 mm) was applied. This topcoat was cured for 17 minutes at 265°F (130°C). The DOI was measured using a DORIGON DOI meter model D47-6, with the average of three readings taken at the top, middle and bottom of the sample being reported in Table II following.

TABLE I

| SAMPLE OR COMPARATIVE SAMPLE | FILLER | |
| --- | --- | --- |
| | Type | Amount, %[1] |
| A* | None | - |
| B* | Flaked Glass[2] | 20 |
| C* | Wollastonite[3] | 23 |
| D* | Phlogopite Mica[4] | 20 |
| 1 | Muscovite Mica[5] | 21 |
| 2 | Muscovite Mica/Talc[6] | 21/7.5 |

[1] Based on the total weight of the polyurethane.

[2] A 1/64" (0.4 mm) hammer milled glass, available as 737CB from Owens Corning Corporation.

[3] Wollastonite G, available from NYCO Corporation.

[4] A phlogopite mica available as Suzerite 200 from Marietta Resources International, Ltd., which has an aspect ratio of about 30, a particle size of about 50-75 $\mu$m, and contains 5-6% of sand.

[5] Aspralok 100, available from J.M. Huber, Corp., which has an aspect ratio of about 50-100, a particle size of about 37-44 $\mu$m, less than about 0.1% free sand or silica, and is coated with a proprietary organo silicon hemical.

[6] Aspralok 100 (see note[5]) and Mistron Cyprubond, available from Cyprus Industrial Minerals Co.

*not an example of the invention

The physical properties and DOI measurements for Sample No. 1 and each of the Comparative Samples are as described in Table II following. As a further comparison, the DOI for a UNIPRIME steel test panel is also reported. A UNIPRIME steel test panel is a sample of steel like that used in making automobile body panels and is commercially available from Advanced Coatings Technologies. The steel is cold rolled, zinc phosphite treated with a high film build to 1.1-1.3 mils and unpolished.

EP 0 365 968 A1

**TABLE II**

**SAMPLE OR COMPARATIVE SAMPLE**

| PROPERTY | A* | B* | C* | D* | 1 | 2 | Steel |
|---|---|---|---|---|---|---|---|
| Spec. Gravity[1] | 1.06 | 1.22 | 1.30 | 1.27 | 1.20 | 1.29 | – |
| Flex. Mod.,[1] psi (GPa) | 80,000 (0.55) | 230,000 (1.6) | 228,000 (1.6) | 200,000 (1.4) | 220,000 (1.5) | 245,000 (1.7) | – |
| Tens. Str.,[1] psi (MPa) | 3500 (24) | 4800 (33) | 4500 (31) | 3500 (24) | 4000 (28) | 4500 (31) | – |
| Elongation,[1] % | 180 | 35 | 65 | 48 | 27 | 46 | – |
| Izod Impact[1], ft-lb./in (J/m) at 72°F (22°C) | 10.8 (575) | 3.5 (185) | 3.2 (170) | 2.7 (145) | 3.6 (190) | 3.2 (170) | – |
| Heat Sag, in (mm) 250°F[1] (120°C) | 0.06 (1.5) | 0.07 (1.8) | 0.17 (4.3) | 0.10 (2.5) | 0.06 (1.5) | 0.05 (1.3) | – |

EP 0 365 968 A1

## TABLE II (continued)

### SAMPLE OR COMPARATIVE SAMPLE

| PROPERTY | A* | B* | C* | D* | 1 | 2 | Steel |
|---|---|---|---|---|---|---|---|
| Heat Sag, in (mm) 325°F[1] (120°C) | >2 (51) | 0.40 (10) | 0.40 (10) | 0.40 (10) | 0.34 (8.6) | 0.37 (9.4) | - |
| DOI[6] | 96 | 72 | 84 | 80 | 94 | 93 | 97 |
| CLTE[7] in/in/°F, X 10⁻⁶ | | | | | | | |
| -40°F to 72°F (-40°C to 22°C) | 80 | 28 | 22 | 38 | 30 | 25 | - |
| 72°F to 150°F (22°C to 65°C) | 85 | 31 | 28 | 38 | 32 | 29 | |
| 72°F to 250°F (22°C to 120°C) | 88 | 33 | 30 | 37 | 35 | 32 | |

[1] ASTM D-792-66
[2] ASTM D-790-80 in pounds/square inch (psi).
[3] ASTM D-638-84.
[4] ASTM D-256-81.
[5] Determined at the stated temperature for 30 minutes with a 6" overhang, by ASTM D-3765-85 in inches.
[6] DOI is distinctness of image.
[7] Coefficient of linear thermal expansion as measured by ASTM D-696-79 in inch/inch/°F.

As can be be seen from the data presented in Table II, the mica filler used according to the practice of the invention provides excellent surface qualities of a painted surface, at minimal sacrifice of physical properties, particularly impact strength, compared to the other filled polymers evaluated (Comparative Samples B, C and D).

Example 3 and Comparative Sample E

Polyurethane-urea polymer samples were prepared as in Example 1 except that 22 weight percent of the Muscovite mica of Example 1 was used in Example 3 while 20.5 weight percent of the phlogopite mica of Comparative Sample D was used in Comparative Sample E.

Except as noted, physical properties were measured as in Example 1 and 2. The Gardner Impact Strength was determined by ASTM-D-3029-84. The physical properties are listed in Table III.

Table III

| Properties | Example 3 | Comparative Sample E* |
|---|---|---|
| Spec. Gravity<br>Flex. Mod., psi (GPa)<br>Tensile Strength, psi (MPa)<br>% Elongation | 1.225<br>230,000 (1.6)<br>4,000 (28)<br>31 | 1.27<br>200,000 (1.4)<br>3320 (23)<br>48 |
| IZOD Impact ft.-lb./in. (J/mm) | | |
| at 73°F (23°C)<br>at -20°F (-29°C) | 40.0 (2.1)<br>20.8 (1.1) | 30 (1.6)<br>-- |
| Gardner-Impact ft.-lb. | | |
| at 73°F (23°C)<br>at -20°F (-29°C) | 5.4 (5 x 10⁻³)<br>0.7 (6.7 x 10⁻³) | 2.7 (2.5 x 10⁻³)<br>0.3 (2.8 x 10⁻³) |
| 6" 150 mm Heat Sag. (in.) (mm) | | |
| at 60-250°F (15.5-121°C)<br>at 60-325°F<br>HDT†, °F at 66°F (°C at 19°C), psi<br>wt.% Filler<br>DOI. | .05 (1.27)<br>0.38 (9.7)<br>325 (2.2)<br>22.0<br>94-96 | 0.10 (2.54)<br>0.40 (10.2)<br>318 (2.2)<br>20.5<br>80-82 |
| C.L.T.E. in./in. °F X 10⁻⁶ (mm/mm °C x 10⁻⁶) | | |
| at -40-72°F (-40-22°C)<br>at 72-150°F (22-65°C)<br>at 72-250°F (22-120°C) | 26.8<br>32.2<br>35.0 | -<br>-<br>- |

*not an example of the invention
†heat distortion temperature ASTM D-1637-83

The data in Table III confirms that they use a mica filler according to the practice of the invention an in Example 3 results in molded polymer samples having both excellent impact qualities and excellent distinctness of image on a painted surface.

**Claims**

1. A filled polymer composition comprising a polyurethane and/or polyurea matrix having dispersed therein a mica filler having a thickness of less than about 1.5 μm or less than about 1 μm or less than about 0.8 μm.

2. A filled polymer composition as claimed in Claim 1 wherein the mica filler has an aspect ratio of greater than about 40 or from 50 to 250.

3. A filled polymer composition as claimed in any one of the preceding claims wherein the mica filler is surface treated with an organo silicon compound.

4. A filled polymer composition as claimed in any one of the preceding claims wherein the composition contains at least about 5 weight percent mica filler or at least about 20 weight percent mica filler or from 5 to weight percent mica filler.

5. A filled polymer composition as claimed in any one of the preceding claims wherein the composition has a notched Izod impact strength of at least about 2.5 ft-lb./in notch (135 J/m notch) or at least about 3 ft-lb./in notch (160 J/m notch) or at least about 3.5 ft-lb/in notch (185 J/m notch).

6. A filled polymer composition as claimed in any one of the preceding claims wherein the composition has a notched Izod impact strength of at least about 3 ft-lb./in notch (160 J/m notch) and exhibits a distinctness of image on a painted surface of at least about 90.

7. A filled polymer composition as claimed in any one of the preceding claims wherein said polyurethane and/or polyurea is a reaction product of precursor materials comprising an aromatic polyisocyanate, an aromatic diamine or alkylene glycol chain extender, and a relatively high equivalent weight isocyanate-reactive material which is a primary hydroxyl-, primary amine- or secondary amine-terminated polyether having an average functionality of 1.8 to 4 and an equivalent weight of from 1000 to 2500.

8. A filled polymer composition as claimed in any one of the preceding claims wherein the flexural modulus is at least about 150,000 pounds per square inch (1000 MPa).

9. A filled polymer composition as claimed in any one of the preceding claims containing an additional filler selected from talc, wollastonite and mixtures thereof and said additional filler is present in an amount equivalent to less than about 50 weight percent of the combined weight of mica and additional fillers.

10. A filled polymer composition comprising a polyurethane and/or polyurea matrix having dispersed therein a mica filler delaminated such that the filled polymer composition retains a notched Izod impact strength of at least about 2.5 ft-lb./in notch (135 J/m notch) and a distinctness of image on a painted surface of at least about 85.

11. A filled polymer composition comprising a polyurethane and/or polyurea matrix having dispersed therein a muscovite mica filler.

12. An exterior automobile body panel prepared by molding the polymer composition of any one of the preceding claims.

13. A process for making a filled polymer composition as claimed in any one of Claims 1 to 12 which comprises intermixing the mica filler with the polyurethane and/or polyurea polymers to provide a substantially homogeneous dispersion of the filler.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE WPIL, no. 88-194735, Derwent Publications Ltd, London, GB; & JP-A-63 132 950 (TOYO RUBBER IND KK) 04-06-1988 --- | 1 | C 08 K    3/34 <br> C 08 L   75/02 <br> C 08 L   75/04 |
| X,D | EP-A-0 214 533  (SUMITOMO BAYER URETHANE CO. LTD) <br> * Column 4, lines 15-25; column 5, example 1 * ----- | 1-13 | |

TECHNICAL FIELDS SEARCHED (Int. Cl.5)

C 08 K
C 08 L

The present search report has been drawn up for all claims

| Place of search | Date of completion of the search | Examiner |
|---|---|---|
| THE HAGUE | 22-01-1990 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)